(19) Europäisches Patentamt
European Patent Office
Office européen des brevets

(11) **EP 2 917 083 B1**

(12) **EUROPÄISCHE PATENTSCHRIFT**

(45) Veröffentlichungstag und Bekanntmachung des Hinweises auf die Patenterteilung:
**14.11.2018   Patentblatt 2018/46**

(21) Anmeldenummer: **13765718.5**

(22) Anmeldetag: **19.09.2013**

(51) Int Cl.:
*B60W 30/18* (2012.01)          *B60W 50/00* (2006.01)
*B60W 30/095* (2012.01)        *B60W 30/14* (2006.01)

(86) Internationale Anmeldenummer:
**PCT/EP2013/069448**

(87) Internationale Veröffentlichungsnummer:
**WO 2014/072108 (15.05.2014 Gazette 2014/20)**

(54) **FAHRZEUGSTEUERUNG**

VEHICLE CONTROL

COMMANDE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2012   DE 102012220530**
**21.06.2013   DE 102013211753**

(43) Veröffentlichungstag der Anmeldung:
**16.09.2015   Patentblatt 2015/38**

(73) Patentinhaber: **Robert Bosch GmbH**
**70442 Stuttgart (DE)**

(72) Erfinder: **KNOOP, Michael**
**71638 Ludwigsburg (DE)**

(56) Entgegenhaltungen:
**EP-A1- 2 476 596          DE-A1-102007 018 733**
**DE-A1-102010 026 769     DE-A1-102010 048 103**

EP 2 917 083 B1

**Beschreibung**

Die Erfindung betrifft eine Fahrzeugsteuerung. Insbesondere betrifft die Erfindung eine Geschwindigkeitssteuerung eines Kraftfahrzeugs, welches über einen Rekuperator verfügt.

Ein Kraftfahrzeug umfasst einen Rekuperator, mittels dem die kinetische Energie des Kraftfahrzeugs in elektrische Energie umgewandelt werden kann. Die umgesetzte Energie kann zur Aufladung eines elektrischen Energiespeichers dienen, wobei das Fahrzeug mittels eines Antriebsmotors antreibbar sein kann, der aus dem elektrischen Energiespeicher betrieben werden kann. Üblicherweise ist zusätzlich zum Rekuperator eine Reibbremsanlage vorgesehen, mittels derer die kinetische Energie des Fahrzeugs in Wärme umgesetzt werden kann. Die Wärme wird üblicherweise an eine Umgebung abgegeben und ist für das Fahrzeug nicht mehr nutzbar.

Es sind unterschiedliche Vorschläge gemacht worden, die Geschwindigkeit eines Kraftfahrzeugs auf vorteilhafte Weise zu steuern. DE 10 2010 003 449 A1 zeigt eine Steuereinrichtung für einen Rekuperator an Bord eines Kraftfahrzeugs und ein Verfahren zur Steuerung des Rekuperators.

DE 10 2006 017 176 A1 betrifft eine Geschwindigkeitsregelvorrichtung an Bord eines Kraftfahrzeugs.

DE 10 2010 026 769 A1 betrifft ein Verfahren und eine Vorrichtung zum Betrieb eines Fahrzeugs.

DE 10 2008 000 131 A1 zeigt ein weiteres Verfahren zum Betreiben eines Fahrzeugs.

Der Erfindung liegt die Aufgabe zugrunde, eine Technik zur Geschwindigkeitsregelung des Fahrzeugs anzugeben, die in verbesserter Weise einen energiesparenden Betrieb des Fahrzeugs ermöglicht. Die Erfindung löst diese Aufgabe mittels eines Verfahrens, eines Computerprogrammprodukts und einer Steuereinrichtung mit den Merkmalen der unabhängigen Ansprüche. Unteransprüche geben bevorzugte Ausführungsformen wieder.

Offenbarung der Erfindung

Ein erfindungsgemäßes Verfahren zur Geschwindigkeitssteuerung eines Fahrzeugs umfasst Schritte des Bestimmen eines Parameters in der Umgebung eines Fahrzeugs mittels eines Sensors, des Bestimmens eines Fahrkorridors auf der Basis des bestimmten Parameters, des Bestimmens einer Bewegungsbahn innerhalb des Fahrkorridors und des Steuerns der Beschleunigung des Fahrzeugs in Abhängigkeit von der Bewegungsbahn. Dabei wird die Bewegungsbahn in Abhängigkeit eines maximalen Energieumsatzes eines Rekuperators bestimmt.

Der Rekuperator umfasst üblicherweise einen Generator, der durch seine Bauart auf die Übertragung eines maximalen Drehmoments eingeschränkt ist. Die Bewegungsbahn kann nun so bestimmt werden, dass der Rekuperator unterhalb dieses Drehmoments betrieben wird, so dass auf die Betätigung einer Reibbremse verzichtet werden kann. Die Geschwindigkeit des Fahrzeugs kann dadurch so gesteuert werden, dass ein vergrößerter Anteil der im Fahrzeug gespeicherten kinetischen Energie durch den Rekuperator verwertbar gemacht wird, anstatt die Energie in Form von Wärme abzustrahlen.

Die Bewegungsbahn wird so bestimmt, dass eine Verzögerung des Fahrzeugs im Rahmen der Steuerung seine Beschleunigung möglichst vollständig mittels des Rekuperators erfolgen kann. Dabei kann insbesondere die maximale Verzögerungsfähigkeit des Rekuperators berücksichtigt werden.

Zusätzlich wird die Bewegungsbahn bezüglich eines Komfortkriteriums bestimmt, um eine hohe Beschleunigung zu vermeiden. Dadurch kann die Geschwindigkeitssteuerung des Fahrzeugs nicht nur energieeffizient, sondern auch komfortabel ausgelegt werden. Die beiden Regelungsstrategien können sich in Teilen überlappen bzw. gegenseitig ergänzen, so dass der Betrieb des Fahrzeugs sowohl angenehmer als auch wirtschaftlicher sein kann.

Bevorzugterweise ist das Komfortkriterium so bestimmt, dass eine hohe Beschleunigung, insbesondere gegen Ende eines Verzögerungsvorgangs, vermieden wird. Dies kann dazu beitragen, eine gleichmäßigere Verzögerung durchzuführen, die sowohl energieeffizienter als auch komfortabler sein kann.

Ferner erfolgt eine Gewichtung zwischen dem Komfortkriterium und dem Energieumsatz des Rekuperators. So kann individuell vorgegeben werden, welche Prioritätsverhältnisse zwischen einem energieeffizienten und einem komfortablen Betrieb des Fahrzeugs bestehen.

Die Gewichtung ist von einem Ladezustand eines Energiespeichers abhängig, der durch den Rekuperator aufladbar ist. So kann das Fahrzeug automatisch komfortabel betrieben werden, solange der Energiespeicher einen hohen Füllgrad aufweist, und energieeffizient, falls der Energiespeicher zur Neige geht.

Die Bewegungsbahn kann jeweils für ein vorbestimmtes Intervall, etwa ein Zeitoder Längenintervall, bestimmt werden, wobei die Bestimmung der Bewegungsbahn innerhalb jedes Intervalls mehrfach erfolgt. Dadurch kann dynamisch auf Ereignisse im Umfeld des Kraftfahrzeugs reagiert werden, die beispielsweise durch andere Verkehrsteilnehmer bedingt sein können. Die Bestimmung des vor dem Fahrzeug liegenden Fahrkorridors bzw. der vor dem Fahrzeug liegenden Bewegungsbahn kann so mit verbesserter Genauigkeit durchgeführt werden.

In einer Ausführungsform wird ein Beschleunigungsverlauf wenigstens für die Zeit bis zur nächsten Bestimmung bestimmt und einem Längsdynamikregler des Fahrzeugs bereitgestellt. Der Längsdynamikregler kann den Anfang des Beschleunigungsverlaufs umsetzen, bevor eine neue Bestimmung durchgeführt ist. Der Beschleunigungsverlauf des Fahrzeugs kann dadurch gleichmäßiger gestaltet sein.

Ein Beschleunigungsverlauf der Bewegungsbahn kann auf der Basis mehrerer Parameter mittels eines Kennfelds bestimmt werden. Eine Optimierung bezüglich der Energieeffizienz, des Komforts oder einer Kombination aus den beiden Kriterien kann so schnell und mit wenig Rechenaufwand in Steuerungsgrößen umgesetzt werden. Ein Verarbeitungsaufwand zur Erstellung des Kennfelds oder Teilen davor zur Laufzeit kann somit eingespart werden. Verarbeitungs- und Speicherressourcen können eingespart werden.

Ein erfindungsgemäßes Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Eine erfindungsgemäße Steuereinrichtung zur Geschwindigkeitssteuerung eines Fahrzeugs umfasst einen Sensor zur Bestimmung eines Parameters in der Umgebung eines Fahrzeugs, eine Verarbeitungseinrichtung zur Bestimmung eines Fahrkorridors auf der Basis des bestimmten Parameters und zur Bestimmung einer Bewegungsbahn innerhalb des Fahrkorridors, wobei die Bewegungsbahn so bestimmt wird, dass eine Verzögerung des Fahrzeugs im Rahmen der Steuerung seiner Beschleunigung möglichst vollständig mittels des Rekuperators erfolgen kann, wobei die Bewegungsbahn zusätzlich bezüglich eines Komfortkriteriums bestimmt wird, um eine hohe Beschleunigung zu vermeiden, wobei eine Gewichtung zwischen dem Komfortkriterium und dem Energieumsatz des Rekuperators erfolgt, wobei die Gewichtung von einem Ladezustand eines Energiespeichers abhängig ist, der durch den Rekuperator aufladbar ist, und ferner einen Längsdynamikregler zur Steuerung der Beschleunigung des Fahrzeugs in Abhängigkeit von der Bewegungsbahn.

Das Verfahren und die Steuereinrichtung sind insbesondere für den Einsatz an Bord eines Kraftfahrzeugs geeignet. Das Kraftfahrzeug kann aus einem elektrischen Energiespeicher antreibbar sein, wobei sowohl ein rein elektrischer als auch ein hybrider Antrieb möglich sind.

Kurze Beschreibung der Figuren

Die Erfindung soll nun mit Bezug auf die beigefügten Figuren genauer beschrieben werden, in denen:

Fig. 1     ein Blockschaltbild eines Antriebssystems für ein Fahrzeug;

Fig. 2     ein Diagramm mit einem Fahrkorridor und einer Bewegungsbahn des Kraftfahrzeugs aus Fig. 1;

Fig. 3     eine Drehmomentkurve und eine Beschleunigungskurve am Kraftfahrzeug von Fig. 1 und;

Fig. 4     die Übertragungsfunktion $\sigma_1$;

Fig. 5     eine Anpassung eines Parameters $\rho$ an einen Ladezustand des Energiespeichers von Fig. 1;

Fig. 6     ein Weg-Zeit-Diagramm des Fahrzeugs von Fig. 1 während eines Beispielmanövers, und

Fig. 7     Varianten des Beispielmanövers von Fig. 6 durch das Kraftfahrzeug von Fig. 1

darstellt.

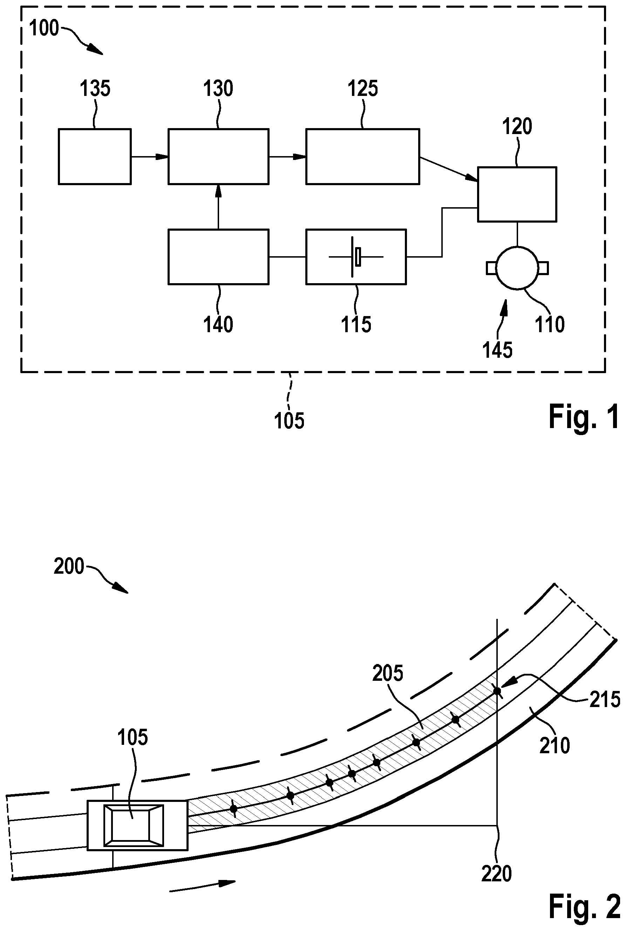

Figur 1 zeigt ein Blockschaltbild eines Antriebssystems 100 für ein Fahrzeug 105. Das Fahrzeug 105 umfasst einen Antriebsmotor 110, der auch als Generator verwendbar ist, einen elektrischen Energiespeicher 115 zum Austausch elektrischer Energie mit dem Antriebsmotor 110, eine Motorsteuerung 120 zur Steuerung des Energieflusses zwischen dem elektrischen Energiespeicher 115 und dem Antriebsmotor 110, einen Längsdynamikregler 125 sowie eine Verarbeitungseinrichtung 130. In einer Ausführungsform kann der Längsdynamikregler 125 integriert mit der Verarbeitungseinrichtung 130 ausgeführt sein. Die Verarbeitungseinrichtung 130 ist ferner verbunden mit einem Sensor 135 zur Abtastung eines Umfeld des Fahrzeugs 105 sowie optional einer Schnittstelle 140 zur Abtastung eines Parameters des elektrischen Energiespeichers 115. Wird der Antriebsmotor 110 als Generator betrieben, so wird er als Rekuperator 145 bezeichnet.

Für den vorliegenden Zusammenhang ist unerheblich, aus welcher Quelle das Fahrzeug 105 angetrieben wird. In unterschiedlichen Ausführungsformen können der Antriebsmotor 110, ein nicht dargestellter Verbrennungsmotor oder eine andere Einrichtung dafür verwendet werden.

Figur 2 zeigt ein Diagramm 200 mit einem Fahrkorridor 205 für das Fahrzeug 105 aus Figur 1. Das Fahrzeug 105 ist in einer vorbestimmten Bewegungsrichtung auf einer Straße 210 unterwegs. Mittels einer oder mehrerer Sensoren 135, die beispielsweise eine Videokamera, einen Radarsensor, einem Lidar-Sensor oder andere Sensoren umfassen können, werden einer oder mehrere Parameter bestimmt, auf deren Basis die Verarbeitungseinrichtung 130 den Fahrkorridor 205 bestimmt. Ferner bestimmt die Verarbeitungseinrichtung 130 innerhalb des Fahrkorridors 205 eine Bewegungsbahn 215. Die Bewegungsbahn 215 umfasst Informationen, die darauf schließen lassen, an welcher Stelle das Fahrzeug 105 welche Geschwindigkeit aufweisen soll. Dazu kann die Bewegungsbahn 215 beispielsweise als Abfolge von Zeiten und Orten oder als Abfolge von Orten und Geschwindigkeiten angegeben sein. Die Bestimmung der Bewegungsbahn 215 und üblicherweise auch des Fahrkorridors 205 erfolgt bevorzugterweise zeitoder entfernungsgesteuert bis zu einem Vorhersagehorizont 220. Die Bestimmung der Bewegungsbahn 215 erfolgt auf der Basis eines weiteren Parameters, der einen maximalen Energieumsatz des Rekuperators 145 betrifft. Im Folgenden wird ein Weg bzw. eine Bewegung des Fahrzeugs 110 stets entlang der Bewegungsbahn 215 angenommen, so dass Kurven, Steigungen oder Gefälle unbeachtlich sind.

Im Folgenden wird davon ausgegangen, dass das Fahrzeug 105 auf der Bewegungsbahn 215 abgebremst werden soll. Für den Abbremsvorgang soll der Rekuperator 145 verwendet werden. Durch seine Bauart weist der Rekuperator 145 bzw. dessen Generator 110 ein maximales Drehmoment auf, das er übertragen kann. Dieses Drehmoment ist drehzahlabhängig und durch die folgende Gleichung 1 angegeben:

$$M_{Max,Gen}(n) \qquad\qquad (\text{Gleichung 1})$$

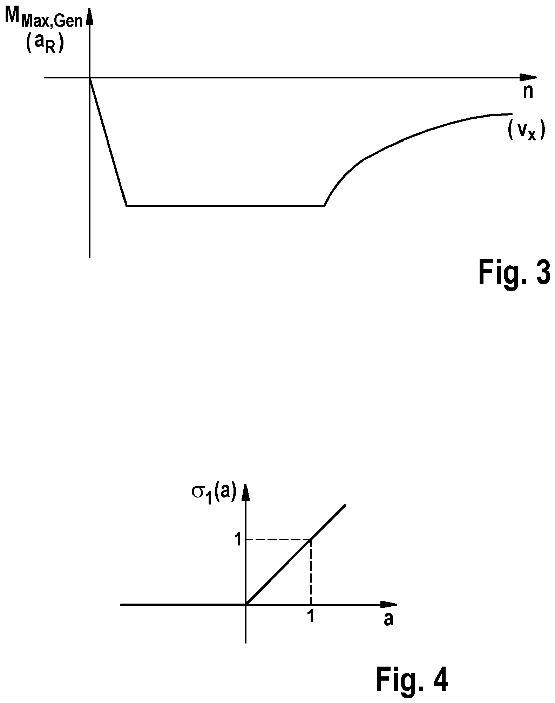

Figur 3 zeigt einen exemplarischen Verlauf des übertragbaren Drehmoments des Rekuperators 145 aus Figur 1. In vertikaler Richtung sind ein Antriebsmoment und in horizontaler Richtung eine Drehzahl eingetragen. Die maximal durch den Rekuperator 145 bewirkbare Verzögerung des Fahrzeugs 105 weist qualitativ die gleiche Kurve auf, wenn in der horizontalen Richtung eine Geschwindigkeit des Fahrzeugs 105 und in der vertikalen Richtung eine Beschleunigung angetragen werden. Die Umrechungen zwischen dem Drehmoment des Rekuperators 145 und der Beschleunigung bzw. der Geschwindigkeit des Fahrzeugs 105 können dabei wie folgt durchgeführt werden:

$$a_R = \frac{i}{mr_R} M_{Max.Gen} \qquad\qquad (\text{Gleichung 2})$$

$$v_x = \frac{r_R}{i} \cdot \frac{2\pi}{60} n \qquad\qquad (\text{Gleichung 3})$$

mit:

| | |
|---|---|
| $a_R$ | Rekuperationsverzögerung in m/s$^2$ |
| i | Getriebeübersetzung el. Maschine - Rad |
| $M_{Max,Gen}$ | Max. Generatormoment der elektrischen Maschine |
| m | Fahrzeugmasse in kg, evtl. ergänzt um Drehmassenäquivalente für Motor und Räder |
| n | Drehzahl der elektrischen Maschine in 1/min |
| $r_R$ | Radradius in m |
| $v_x$ | Fahrzeuggeschwindigkeit in m/s |

Die in Figur 3 dargestellte Kurve zeigt somit auch die Grenzverzögerung des Fahrzeugs 105 durch den Rekuperator 145, die von der Fahrzeuggeschwindigkeit abhängig ist:

$$a_R(v_x) \qquad\qquad (\text{Gleichung 4})$$

Um eine Energieeffizienz zu bestimmen, die angibt, wie effizient eine Umwandlung der kinetischen Energie des Fahrzeugs 105 mittels des Rekuperators 145 in elektrische Energie ist, wird die in einer Reibungsbremse des Fahrzeugs 100 umgesetzte Energie wie folgt bestimmt:

$$W_R = \int_0^{t_H} mv_x \sigma_1(a_R(v_x) - a_x)dt \qquad\qquad (\text{Gleichung 5})$$

mit:

$a_x$       Fahrzeugbeschleunigung

$\sigma_1(a)$     eine Übertragungsfunktion

$t_H$       der Vorhersagehorizont 220.

Die Übertragungsfunktion $\sigma_1$ entspricht dabei der in Figur 4 dargestellten Funktion.

Nach Normierung, d.h. Division durch die Masse des Fahrzeugs 105 erhält man ein Gütemaß $J_R$ für die Güte der Rekuperation:

$$J_R = \frac{W_R}{m} = \int_0^{t_H} v_x \sigma_1 \big(a_R(v_x) - a_x\big) dt \qquad (\text{Gleichung 6})$$

Die Bewegungsbahn 215 wird in einer Ausführungsform so bestimmt, dass das Rekuperations-Gütemaß $J_R$ möglichst minimiert wird, um eine Energieeffizienz der Verzögerung des Fahrzeugs 105 zu steigern.

In einer weiteren Ausführungsform wird zusätzlich zum Rekuperations-Gütemaß $J_R$ noch ein Komfort-Gütemaß $J_C$ bestimmt, etwa auf folgende Weise:

$$J_C = \int_0^{t_H} a_x^2 e^{\alpha t} dt \qquad (\text{Gleichung 7})$$

Das Komfort-Gütemaß $J_C$ ist umso größer, je höher die durch das Fahrzeug 105 erreichten Beschleunigungswerte sind. Beschleunigungswerte gegen Ende eines betrachteten Manövers können besonders stark gewichtet werden. Dazu wird in der Ausführungsform von Gleichung 7 der Parameter $\alpha > 0$ gewählt.

Alternativ kann auch der Ruck als zeitliche Ableitung der Beschleunigung im Komfort-Gütemaß bewertet werden:

$$J_C = \int_0^{t_H} \left( \frac{da_x}{dt} \right)^2 e^{\alpha t} dt \ . \qquad (\text{Gleichung 8})$$

In der Ausführungsform von Gleichung 8 wird der Parameter vorzugsweise $\alpha \geq 0$ gewählt, um einen Ruck gegen Ende eines betrachteten Manövers besonders stark zu gewichten.

Beide Gütemaße lassen sich mit einem Gewichtungsparameter p zu einem Gesamt-Gütemaß J kombinieren, wobei die Bewegungsbahn 215 so bestimmt wird, dass das Gesamt-Gütemaß J möglichst minimiert wird.

$$J = \rho \cdot J_R + \big(1 - \rho\big) J_C \qquad (\text{Gleichung 9})$$

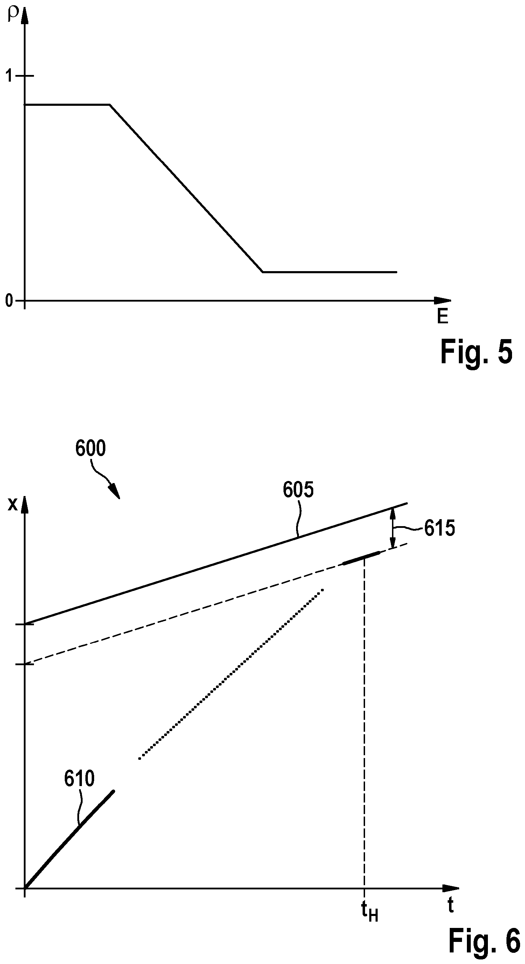

Bei $\rho = 1$ wird nur die Güte der Rekuperation bewertet, bei $\rho = 0$ nur die Güte des Komforts. Der Parameter $\rho$ kann fest vorgegeben oder innerhalb vorbestimmter Grenzen durch einen Fahrer des Fahrzeugs 105 beeinflussbar sein. In einer Ausführungsform besteht ein vorgegebener Zusammenhang zwischen einer im Energiespeicher 115 gespeicherten Energie E und dem Parameter $\rho$, wobei ein beispielhafter Zusammenhang in Figur 5 gezeigt ist.

Mittels der Verarbeitungseinrichtung 130 wird die Bewegungsbahn 215 bezüglich der Längsdynamik des Fahrzeugs 105 bestimmt, indem ein Verzögerungsverlauf $a_x(t)$ bestimmt wird. Dabei wird das kombinierte Gütemaß J möglichst minimiert:

$$J \to \underset{a_x(t)}{MIN} \qquad (\text{Gleichung 10})$$

Die Berechnung des Verzögerungsverlaufs kann allgemein durch Optimierungsberechnungen erfolgen. Diese können jedoch numerisch sehr aufwändig sein. In einer Ausführungsform können diese Optimierungsberechnungen für eine Vielzahl verschiedener Anfangswerte bereits durchgeführt werden, bevor die Bestimmung des Verzögerungsverlaufs erfolgt. Die Ergebnisse der Optimierungsberechnungen werden in einem Kennfeld, also einer mehrdimensionalen Tabelle, abgespeichert, so dass Verarbeitungseinrichtung 130 einen Beschleunigungswert, der einer Kombination von Parametern zugeordnet ist, mittels des Kennfelds rasch bestimmen kann:

$$a(0) = f\left(\Delta x, \Delta v, \alpha, \rho, t_H\right) \qquad (\text{Gleichung 11})$$

Um sicher zu stellen, dass auf sich ändernde Vorgaben bzw. Parameter rasch genug reagiert werden kann, ist es vorteilhaft, die Bestimmung eines Beschleunigungsverlaufs auf der Bewegungsbahn 215 häufig zu bestimmen. Insbesondere ist es vorteilhaft, de Beschleunigungsverlauf während des Durchfahrens der Strecke bis zum Vorhersagehorizont 220 mehrfach zu bestimmen. Es wird daher vorgeschlagen, das Umfeld des Fahrzeugs 105 mittels des Sensors 135 mit einer Zykluszeit abzutasten, die wesentlich kleiner ist als die Zeit, die bis zum Erreichen des Vorhersagehorizonts 220 vergeht. Beispielsweise können in dieser Zeit zehn oder mehr Zyklen durchgeführt werden. In jedem Zyklus wird der optimale Verzögerungsverlauf in Abhängigkeit der Zeit zwischen der gegenwärtigen Position und dem Vorhersagehorizont 220 bestimmt. Die bestimmte Anfangsbeschleunigung des Verzögerungsverlaufs wird an den Längsdynamikregler übergeben. Alternativ kann auch ein Anfangsverlauf a(t) übergeben werden, der den Beschleunigungsverlauf zwischen der gegenwärtigen Position und der Position beschreibt, an der die Bestimmung des nächsten Zyklus vorliegt. Nach einer Bestimmung wird bis zum Ende des Zyklus abgewartet und dann eine neue Bestimmung des optimalen Verzögerungsverlaufs gestartet.

Figur 6 zeigt ein Beispielmanöver 600 des Kraftfahrzeugs 105 aus Figur 1. In horizontaler Richtung ist eine Zeit, in vertikaler Richtung ein Ort entlang der Bewegungsbahn 215 dargestellt. Ein erster Verlauf 605 repräsentiert eine Ortskurve eines Fahrzeugs, welches dem Fahrzeug 105 vorausfährt. Die Geschwindigkeit des vorausfahrenden Fahrzeugs ist konstant und zumindest anfangs geringer als die des Fahrzeugs 105. Ein zweiter Verlauf 610 repräsentiert Abschnitte einer Ortskurve des Fahrzeugs 105. Das Fahrzeug 105 soll sich an das vorausfahrende Fahrzeug annähern und ihm in einem vorbestimmten Abstand 615 folgen, wofür unterschiedliche Geschwindigkeitsverläufe und daher auch unterschiedliche Ortskurven möglich sind.

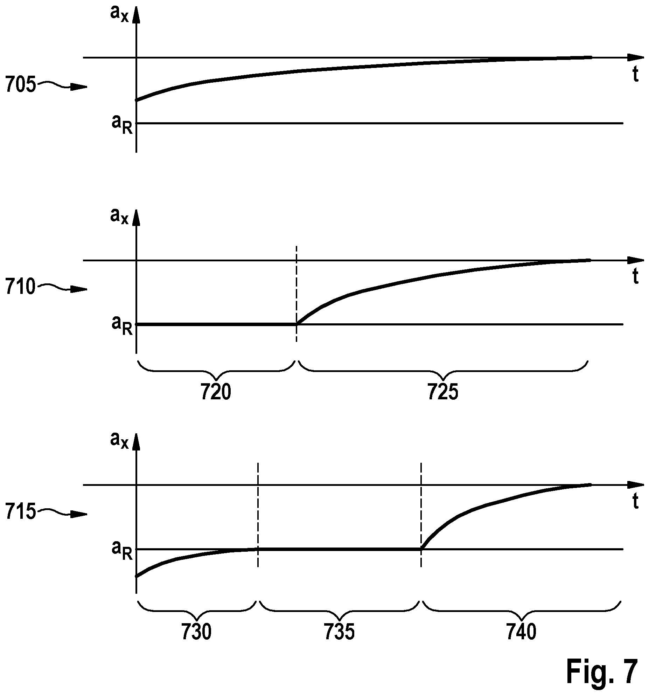

Figur 7 zeigt drei unterschiedliche Fälle 705, 710 und 71, die bei der beschriebenen Annäherung auftreten können. In horizontaler Richtung ist jeweils eine Zeit und in vertikaler Richtung eine Beschleunigung des Fahrzeugs 105 entlang seiner Bewegungsrichtung dargestellt. Im ersten Fall 705 ist der Abstand 615 relativ groß bezüglich eines Geschwindigkeitsunterschieds $\Delta v$ zwischen den Fahrzeugen. Die Verzögerung des Fahrzeugs 105 verläuft vollständig innerhalb der Rekuperationsgrenze von Figur 3, d.h. die Verzögerung des Fahrzeugs 105 kann ohne den Einsatz einer Reibungsbremse vollständig mittels des Rekuperators 145 bewirkt werden.

Im zweiten Fall 710 ist der Abstand 615 mittelgroß bezüglich des Geschwindigkeitsunterschieds $\Delta v$. In einem ersten Abschnitt 720 erfolgt die Verzögerung des Fahrzeugs 105 an der Rekuperationsgrenze von Figur 3 und in einem zweiten Abschnitt 725 innerhalb der Rekuperationsgrenze, ebenfalls ohne Einsatz der Reibungsbremse.

Im dritten Fall 715 ist der Abstand 615 klein bezüglich des Geschwindigkeitsunterschieds $\Delta v$. In einem ersten Abschnitt 730 erfolgt eine Verzögerung jenseits der Rekuperationsgrenze von Figur 3, wobei die Reibungsbremse aktiviert wird. In einem zweiten Abschnitt 735 erfolgt wieder eine Verzögerung an der Rekuperationsgrenze und in einem dritten Abschnitt 740 innerhalb der Rekuperationsgrenze.

**Patentansprüche**

1. Verfahren zur Geschwindigkeitssteuerung eines Fahrzeugs (105), folgende Schritte umfassend:

   - Bestimmen eines Parameters in der Umgebung des Fahrzeugs (105) mittels eines Sensors (135);
   - Bestimmen eines Fahrkorridors (205) auf der Basis des bestimmten Parameters;
   - Bestimmen einer Bewegungsbahn (215) innerhalb des Fahrkorridors, und
   - Steuern der Beschleunigung des Fahrzeugs (105) in Abhängigkeit von der Bewegungsbahn,
   - wobei die Bewegungsbahn (215) so bestimmt wird, dass eine Verzögerung des Fahrzeugs (105) im Rahmen der Steuerung seiner Beschleunigung möglichst vollständig mittels des Rekuperators (145) erfolgen kann.
   - wobei die Bewegungsbahn (215) zusätzlich bezüglich eines Komfortkriteriums bestimmt ($J_C$) wird, um eine hohe Beschleunigung zu vermeiden;
   - wobei eine Gewichtung zwischen dem Komfortkriterium ($J_C$) und dem Energieumsatz des Rekuperators (145) erfolgt;

- wobei die Gewichtung von einem Ladezustand eines Energiespeichers (115) abhängig ist, der durch den Rekuperator (145) aufladbar ist

**2.** Verfahren nach Anspruch 1, wobei das Komfortkriterium ($J_C$) so bestimmt ist, dass eine hohe Beschleunigung insbesondere gegen Ende eines Verzögerungsvorgangs vermieden wird.

**3.** Verfahren nach einem der vorangehenden Ansprüche, wobei die Bewegungsbahn (215) jeweils für ein vorbestimmtes Intervall bestimmt wird und die Bestimmung der Bewegungsbahn (215) innerhalb jedes Intervalls mehrfach erfolgt.

**4.** Verfahren nach Anspruch 3, wobei ein Beschleunigungsverlauf für die Zeit bis zur nächsten Bestimmung bestimmt und einem Längsdynamikregler (125) des Fahrzeugs (105) bereitgestellt wird.

**5.** Verfahren nach einem der vorangehenden Ansprüche, wobei ein Beschleunigungsverlauf auf der Basis mehrerer Parameter mittels eines Kennfeldes bestimmt wird.

**6.** Computerprogrammprodukt mit Programmcodemitteln zur Durchführung des Verfahrens nach einem der vorangehenden Ansprüche, wenn das Computerprogrammprodukt auf einer Verarbeitungseinrichtung (130) abläuft oder auf einem computerlesbaren Datenträger gespeichert ist.

**7.** Steuereinrichtung (130) zur Geschwindigkeitssteuerung eines Fahrzeugs (105), umfassend:

- einen Sensor (135) zur Bestimmung eines Parameters in der Umgebung des Fahrzeugs (105);
- eine Verarbeitungseinrichtung (130) zur Bestimmung eines Fahrkorridors (205) auf der Basis des bestimmten Parameters und zur Bestimmung einer Bewegungsbahn (215) innerhalb des Fahrkorridors,
- wobei die Bewegungsbahn (215) so bestimmt wird, dass eine Verzögerung des Fahrzeugs (105) im Rahmen der Steuerung seiner Beschleunigung möglichst vollständig mittels des Rekuperators (145) erfolgen kann.
- wobei die Bewegungsbahn (215) zusätzlich bezüglich eines Komfortkriteriums bestimmt ($J_C$) wird, um eine hohe Beschleunigung zu vermeiden;
- wobei eine Gewichtung zwischen dem Komfortkriterium ($J_C$) und dem Energieumsatz des Rekuperators (145) erfolgt;
- wobei die Gewichtung von einem Ladezustand eines Energiespeichers (115) abhängig ist, der durch den Rekuperator (145) aufladbar ist, und
- einen Längsdynamikregler (125) zur Steuerung der Beschleunigung des Fahrzeugs (105) in Abhängigkeit von der Bewegungsbahn (215).

**Claims**

**1.** Method for controlling the speed of a vehicle (105), comprising the following steps:

- determining a parameter in the surroundings of the vehicle (105) by means of a sensor (135);
- determining a driving corridor (205) on the basis of the determined parameter;
- determining a movement path (215) within the driving corridor, and
- controlling the acceleration of the vehicle (105) as a function of the movement path,
- wherein the movement path (215) is determined in such a way that deceleration of the vehicle (105) within the scope of the control of its acceleration can take place as far as possible completely by means of the recuperator (145),
- wherein the movement path (215) is additionally determined ($J_C$) with respect to a comfort criterion, in order to avoid high acceleration;
- wherein weighting takes place between the comfort criterion ($J_C$) and the energy turnover of the recuperator (145);
- wherein the weighting is dependent on a state of charge of an energy store (115) which can be charged by the recuperator (145).

**2.** Method according to Claim 1, wherein the comfort criterion ($J_C$) is determined in such a way that a high acceleration is avoided, in particular towards the end of a deceleration process.

3. Method according to one of the preceding claims, wherein the movement path (215) is determined in each case for a predetermined interval, and the determination of the movement path (215) takes place repeatedly within each interval.

4. Method according to Claim 3, wherein an acceleration profile is determined for the time up to the next determination process, and a longitudinal dynamics controller (125) of the vehicle (105) is made available.

5. Method according to one of the preceding claims, wherein an acceleration profile is determined on the basis of a plurality of parameters by means of a characteristic diagram.

6. Computer program product with program code means for carrying out the method according to one of the preceding claims when the computer program product runs on a processing device (130) or is stored on a computer-readable data carrier.

7. Control device (130) for controlling the speed of a vehicle (105), comprising:

- a sensor (135) for determining a parameter in the surroundings of the vehicle (105);
- a processing device (130) for determining a driving corridor (205) on the basis of the determined parameter and for determining a movement path (215) within the driving corridor,
- wherein the movement path (215) is determined in such a way that a deceleration of the vehicle (105) within the scope of the control of its acceleration can take place as far as possible completely by means of the recuperator (145),
- wherein the movement path (215) is additionally determined ($J_c$) with respect to a comfort criterion in order to avoid a high acceleration;
- wherein a weighting takes place between the comfort criterion ($J_c$) and the energy turnover of the recuperator (145);
- wherein the weighting is dependent on a state of charge of an energy store (115) which can be charged by the recuperator (145), and
- a longitudinal dynamics controller (125) for controlling the acceleration of the vehicle (105) as a function of the movement path (215).

## Revendications

1. Procédé de commande de la vitesse d'un véhicule (105), le procédé comportant les étapes suivantes :

détermination au moyen d'un capteur (135) d'un paramètre de l'environnement du véhicule (105),
détermination d'un corridor de déplacement (205) sur la base du paramètre qui a été déterminé,
détermination d'une piste de déplacement (215) à l'intérieur du corridor de déplacement et
commande de l'accélération du véhicule (105) en fonction de la piste de déplacement,
la piste de déplacement (215) étant déterminée de manière à ce qu'un ralentissement du véhicule (105) dans le cadre de la commande de son accélération puisse avoir lieu si possible complètement au moyen du récupérateur (145),
la piste de déplacement (215) étant en outre déterminée en fonction d'un critère de confort ($J_C$) pour éviter une accélération élevée,
une pondération entre le critère de confort ($J_C$) et la conversion d'énergie par le récupérateur (145) ayant lieu et la pondération dépendant de l'état de charge d'une réserve d'énergie (115) qui peut être chargée par le récupérateur (145).

2. Procédé selon la revendication 1, dans lequel le critère de confort ($J_C$) est déterminé de manière à éviter une accélération élevée, en particulier vers la fin d'une opération de ralentissement.

3. Procédé selon l'une des revendications précédentes, dans lequel la piste de déplacement (215) est déterminée pour un intervalle prédéterminé et la détermination de la piste de déplacement (215) a lieu plusieurs fois à l'intérieur de chaque intervalle.

4. Procédé selon la revendication 3, dans lequel l'évolution de l'accélération pendant la durée qui conduit à la détermination suivante est déterminée et délivrée à un régulateur (125) de dynamique longitudinale du véhicule (105).

**5.** Procédé selon l'une des revendications précédentes, dans lequel l'évolution de l'accélération est déterminée sur la base de plusieurs paramètres au moyen d'un champ de caractéristiques.

**6.** Produit de programme informatique doté de moyens de codes de programme permettant la mise en oeuvre du procédé selon l'une des revendications précédentes lorsque le produit de programme informatique est exécuté sur un dispositif de traitement (130) ou est conservé en mémoire sur un support de données lisibles par ordinateur.

**7.** Dispositif de commande (130) pour la commande de la vitesse d'un véhicule (105), le dispositif comprenant :

un capteur (135) qui détermine un paramètre dans l'environnement du véhicule (105),
un dispositif de traitement (130) qui détermine un corridor de déplacement (205) sur la base du paramètre qui a été déterminé et qui détermine une piste de déplacement (215) à l'intérieur du corridor de déplacement,
la piste de déplacement (215) étant déterminée de manière à ce qu'un ralentissement du véhicule (105) dans le cadre de la commande de son accélération puisse avoir lieu si possible complètement au moyen du récupérateur (145),
la piste de déplacement (215) étant en outre déterminée en fonction d'un critère de confort ($J_C$) pour éviter une accélération élevée,
une pondération entre le critère de confort ($J_C$) et la conversion d'énergie par le récupérateur (145) ayant lieu,
la pondération dépendant de l'état de charge d'une réserve d'énergie (115) qui peut être chargée par le récupérateur (145), et
un régulateur (125) de la dynamique longitudinale qui commande l'accélération du véhicule (105) en fonction de la piste de déplacement (215).

**Fig. 1**

**Fig. 2**

$M_{Max,Gen}$
$(a_R)$

$n$

$(v_x)$

**Fig. 3**

$\sigma_1(a)$

1

1

$a$

**Fig. 4**

ρ

1

0

E

**Fig. 5**

600

605

x

615

610

t$_H$

t

**Fig. 6**

Fig. 7

**IN DER BESCHREIBUNG AUFGEFÜHRTE DOKUMENTE**

**In der Beschreibung aufgeführte Patentdokumente**

- DE 102010003449 A1
- DE 102006017176 A1
- DE 102010026769 A1
- DE 102008000131 A1